# EUROPÄISCHE PATENTANMELDUNG

(11) **EP 3 278 648 A1**
(43) Veröffentlichungstag der Anmeldung: **07.02.2018**
(21) Anmeldenummer: 17401087.6
(22) Anmeldetag: 01.08.2017
(51) Int. Cl.: A01C 7/08, A01B 79/00

(54) **VERFAHREN ZUR STEUERUNG EINER SÄMASCHINE UND SÄMASCHINE ZUR UMSETZUNG DIESES VERFAHRENS**

(30) Priorität: 05.08.2016 DE 102016114532
(71) Anmelder: Amazonen-Werke H. Dreyer GmbH & Co. KG, 49205 Hasbergen (DE)
(72) Erfinder: Brüggemann, Klaus, 27777 Ganderkesee (DE); Bardroff, Alexander, 26127 Oldenburg (DE)

(57) **Zusammenfassung**

Verfahren zur Steuerung einer Sämaschine (1), aufweisend Dosierorgane (8) zur Einspeisung des zu verteilenden Materials in Förderleitungen (10), Sensoreinrichtungen (15) zur Erfassung des Saatgutflusses in den Förderleitungen (10), zumindest ein Anzeige- und/oder Eingabegerät (17) zur Eingabe von Benutzereingaben, eine Speichereinheit zum Hinterlegen der mittels der Sensoreinrichtungen (15) erfassten Daten und/oder der über das Anzeige- und/oder Eingabegerät (17) eingegebenen Benutzereingaben und eine Recheneinheit (16) zur Auswertung der mithilfe der Sensoreinrichtungen (15) erfassten Daten und/oder der über das Anzeige- und/oder Eingabegerät (17) eingegebenen Benutzereingaben sowie zur Erstellung von Steuerbefehlen zur Steuerung der Sämaschine (1) und/oder von Benutzerausgaben zur Anzeige auf dem Anzeige- und/oder Eingabegerät (17). Es ist die Durchführung eines Verfahrens vorgesehen, welches eine Festlegung der Position von Fahrgassen (14) durch den Bediener oder die Recheneinheit, wobei automatisiert der Saatgutfluss in den den betreffenden Fahrgassen-Ausbringelementen (9) zugeordneten Förderleitungen (10) abgeschaltet wird, ein Hinterlegen der festgelegten Position von Fahrgassen (14) in einer Speichereinheit, ein Feststellen eines ausbleibenden Saatgutflusses in den den Fahrgassen-Ausbringelementen (9) zugeordneten Förderleitungen (10) mithilfe der Sensoreinrichtungen (15) und eine Deklaration des ausbleibenden Saatgutflusses als Fahrgassenzustand umfasst.

## Beschreibung

Die Erfindung betrifft ein Verfahren zur Steuerung einer landwirtschaftlichen Sämaschine und eine Sämaschine zur Umsetzung dieses Verfahrens gemäß dem Oberbegriff des Patentanspruches 1.

Eine zum Anlegen von Fahrgassen geeignete Sämaschine ist in EP 0 730 819 B1 beschrieben. Durch einen Bediener werden einer die Sämaschine steuernden Recheneinheit die gewünschte Lage der Fahrgassen und/oder die Ausbringparameter für die anstehende Arbeitsaufgabe über geeignete Eingabeelemente zugeführt und in einer Speichereinheit abgelegt. Mittels eines Anzeigeelements, werden dem Bediener die Ausbringparameter angezeigt. An der Position einer anzulegenden Fahrgasse sendet die Recheneinheit Steuerbefehle an geeignete Schaltvorrichtungen, welche das Anlegen von Fahrgassen bewirken.

Zum Anlegen von Fahrgassen wird typischerweise die Saatgutzuführung zu den betreffenden Fahrgassen-Ausbringelementen zeitweise unterbrochen. Dazu werden beispielsweise die in die entsprechenden Förderleitungen einspeisenden Dosierorgane abgeschaltet oder die Förderleitungen durch geeignete Mittel blockiert.

Aus dem Stand der Technik sind Sämaschinen bekannt, welche in den zu den Ausbringelementen führenden Förderleitungen Sensoreinrichtungen aufweisen, welche den Saatgutfluss zu den Ausbringelementen überwachen. Führen die überwachten Förderleitungen kein oder zu wenig Saatgut, lösen die Sensoreinrichtungen aus und liefern geeignete Benutzerausgaben, um den Bediener auf die unzureichende Saatgutversorgung hinzuweisen.

Eine derartige unzureichende Saatgutversorgung tritt beispielsweise bei einer verschmutzungsbedingten Verstopfung der Förderleitung oder bei einer Fehlfunktion des Dosierorgans auf, welches das im Vorratsbehälter bevorratete Saatgut in die Förderleitungen einspeist.

Nachteilig bei der beschriebenen Sämaschine ist, dass die vorgesehenen Sensoreinrichtungen auch dann auslösen, wenn die Saatguteinspeisung in eine oder mehrere zu Fahrgassen-Ausbringelementen führende Förderleitungen ordnungsgemäß durch die Recheneinheit abgeschaltet wird. Auf diese Weise wird der Bediener durch das regelmäßige Auftreten von Fahrgassen mit einer Vielzahl von fälschlicherweise ausgegebenen Warnmeldungen konfrontiert.

Der Erfindung liegt daher die Aufgabe zugrunde, ein Verfahren und eine Sämaschine zur Umsetzung dieses Verfahrens vorzuschlagen, wodurch die beschriebenen Nachteile überwunden werden und dem Bediener ein komfortables Anlegen von Fahrgassen möglich ist.

Zur Lösung dieser Aufgabe ist die Durchführung eines Verfahrens vorgesehen, wobei das Verfahren die folgenden Verfahrensschritte umfasst:
- Festlegung der Position von Fahrgassen durch den Bediener oder die Recheneinheit, wobei automatisiert der Saatgutfluss in den den betreffenden Fahrgassen-Ausbringelementen zugeordneten Förderleitungen abgeschaltet wird,
- Hinterlegen der festgelegten Position von Fahrgassen in einer Speichereinheit,
- Feststellen eines ausbleibenden Saatgutflusses in den den Fahrgassen-Ausbringelementen zugeordneten Förderleitungen mithilfe der Sensoreinrichtungen und
- Deklaration des ausbleibenden Saatgutflusses als Fahrgassenzustand.

Die Position von Fahrgassen ist abhängig von der Arbeitsbreite einer zur Bearbeitung der besäten Fläche vorgesehenen Maschine. Eine derartige Maschine ist beispielsweise eine landwirtschaftliche Feldspritze oder ein Düngerstreuer, welche zur Pflege der ausgesäten Pflanzen eingesetzt werden. Feldspritzen und/oder Düngerstreuer besitzen üblicherweise eine deutlich größere Arbeitsbereite als eine Sämaschine.

Zur Festlegung der Position der anzulegenden Fahrgassen ist es daher denkbar, dass ein Bediener vorgibt, dass die Fahrgassen jeweils bei Erreichen eines festgelegten Vielfachen des Saatreihenabstandes angelegt werden, wobei das festgelegte Vielfache aus dem Verhältnis von Arbeitsbreite beispielsweise der Feldspritze und dem Saatreihenabstand ermittelt wird.

Ebenfalls denkbar ist, dass der Bediener die Arbeitsbereite der Sämaschine, den Saatreihenabstand und die Arbeitsbreite beispielsweise der Feldspritze in der der Recheneinheit zugeordneten Speichereinheit hinterlegt. Auf Basis dieser Werte berechnet die Recheneinheit die Positionen der anzulegenden Fahrgassen.

Es ist weiterhin denkbar, dass der Bediener Intervalle und/oder Abstände hinterlegt, welche zwischen den anzulegenden, zukünftigen Fahrgassen liegen sollen. Auf dieser Basis berechnet die Recheneinheit die Position der anzulegenden Fahrgassen.

Während des Ausbringvorgangs steuert die Recheneinheit die Sämaschine derart, dass bei Erreichen der Position einer anzulegenden Fahrgasse, die Saatguteinspeisung in die den Fahrgassen-Ausbringelementen zugeordneten Förderleitungen unterbrochen wird. Als Fahrgassen-Ausbringelemente fungieren stets jene Ausbringelemente, bei deren aktueller Position der Bedarf zum Anlegen einer Fahrgasse besteht. Die Fahrgassen-Ausbringelemente sind gegenüber den übrigen Ausbringelementen dadurch charakterisiert, dass sie während der aktuellen Überfahrt kein Saatgut ausbringen.

Die den Förderleitungen zugeordneten Sensoreinrichtungen lösen bei Ausbleiben des Saatgutstroms in den Ausbringelementen und/oder Fahrgassen-Ausbringelementen zugeordneten Förderleitungen aus und liefern ein Ausgabesignal an die Recheneinheit.

Die Recheneinheit gleicht die Position des aktuell festgestellten ausbleibenden Saatgutflusses mit den in der Speichereinheit hinterlegten Positionen der anzulegenden Fahrgassen ab. Wird eine Übereinstimmung der Positionen festgestellt, deklariert die Recheneinheit das festgestellte Ausbleiben des Saatgutflusses als Fahrgassenzustand.

Es ist vorteilhaft, dass auf Basis des festgestellten ausbleibenden Saatgutflusses eine geeignete Benutzerausgabe über das Eingabe- und/oder Anzeigegerät angezeigt wird. Somit wird dem Bediener visuell mitgeteilt, dass der Saatgutfluss zu einem der Ausbringelemente gestört ist. Die angezeigte Benutzerausgabe kann beispielsweise durch einen Signalton akustisch unterstützt sein.

Es kann beispielsweise angezeigt werden, dass ein ausbleibender Saatgutfluss festgestellt und durch die Recheneinheit bereits als Fahrgassenzustand deklariert worden ist. Unabhängig von der Anzeige kann der Bediener zur Kenntnisnahme, Bestätigung und/oder Bewertung der Benutzerausgabe aufgefordert werden. Über Eingaben mittels des Eingabe- und/oder Anzeigegeräts kommt der Bediener dieser Aufforderung nach.

Wird dem Bediener eine beschriebene Benutzerausgabe angezeigt, ergibt sich ein Vorteil daraus, dass die Deklaration des ausbleibenden Saatgutflusses als Fahrgassenzustand automatisiert oder durch den Bediener erfolgt. Eine automatisierte Deklaration als Fahrgassenzustand ist besonders komfortabel für den Bediener. Er muss lediglich die korrekte Arbeitsweise der Sämaschine überwachen, nicht aber entscheiden ob an der aktuellen Position tatsächlich eine Fahrgasse anzulegen ist. Dadurch wird die Gefahr von Bedienfehlern reduziert.

Wird der Bediener hingegen nur über das Ausbleiben des Saatgutflusses zu einem der Ausbringelemente informiert und erfolgt kein Abgleich der Positionen durch die Recheneinheit, gleicht er die Position des festgestellten ausbleibenden Saatgutflusses mit den festgelegten Positionen der anzulegenden Fahrgassen ab. Stellt der Bediener eine Übereinstimmung der Position des festgestellten ausbleibenden Saatgutflusses zu einem der Ausbringelemente und der Position einer anzulegenden Fahrgasse fest, erfolgt die Deklaration als Fahrgassenzustand durch den Bediener. Auf diese Weise hat der Bediener zu jeder Zeit die Kontrolle über die Arbeitsweise der Sämaschine.

Er bestätigt die von der Recheneinheit ausgegebene und über das Eingabe- und/oder Anzeigeelement angezeigte Benutzerausgabe. Gleichzeit bestätigt der Bediener, dass die Sensoreinrichtung die ausbleibende Saatgutförderung in der dem Fahrgassen-Ausbringelement zugeordneten Förderleitung korrekt erkannt hat, diese aber im Fall einer anzulegenden Fahrgasse für die Arbeitsaufgabe unschädlich und/oder erwünscht ist.

Da für anzulegende Fahrgassen und/oder für Fahrgassenzustände ein Ausbleiben des Saatgutsflusses in den entsprechenden Fahrgassen-Ausbringelementen erwünscht ist, ist in diesen Fällen bei einem erneuten Feststellen eines ausbleibenden Saatgutflusses in der beschriebenen Weise keine neuerliche Benutzerausgabe erforderlich. Für den weiteren Ausbringvorgang kann eine entsprechende Benutzerausgabe durch die Recheneinheit unterdrückt werden.

Da der Recheneinheit die Periodizität der anzulegenden Fahrgassen bekannt ist, wird eine besonders vorteilhafte Weiterbildung des Verfahrens dadurch erreicht, dass die Recheneinheit auf Basis der Periodizität der anzulegenden Fahrgassen die Position zukünftiger Fahrgassen ermittelt. Auf diese Weise müssen die Systeme zum Anlegen der Fahrgassen und die Systeme zur Überwachung der Saatgutströme in den Förderleitungen auf elektronischer Ebene nicht verknüpft sein. Es wird in einfacher Weise ein Datensatz erzeugt, welcher vorgibt, in welchen Fällen keine auf einen ausbleibenden Saatgutstrom hinweisende Benutzerausgabe ausgegeben werden muss.

Es ist vorteilhaft, dass die ermittelten Positionen zukünftiger Fahrgassenzustände in der Speichereinheit hinterlegt werden. Durch das Ablegen in der Speichereinheit stehen die ermittelten Positionen zukünftiger Fahrgassenzustände während des gesamten Ausbringvorgangs zur Verfügung.

Es ist weiterhin von Vorteil, dass bei erneutem Feststellen eines ausbleibenden Saatgutflusses in zumindest einer Förderleitung die Position des dieser Förderleitung zugeordneten Ausbringelements mit den in der Speichereinheit hinterlegten Positionen zukünftiger Fahrgassen oder Fahrgassenzustände abgeglichen wird. Durch diesen Abgleich kann festgestellt werden, ob dem Bediener eine warnende Benutzerausgabe angezeigt werden muss.

Es ist vorteilhaft, dass bei Übereinstimmung der Positionen eines erneut ausbleibenden Saatgutflusses in zumindest einer Förderleitung und einer zukünftigen Fahrgasse oder eines Fahrgassenzustands dem Bediener keine Benutzerausgabe angezeigt wird. Auf diese Weise ist sichergestellt, dass Benutzerausgaben, die auf einen ausbleibenden Saatgutstrom in einer der Förderleitungen hinweisen nur dann angezeigt werden, wenn die Einspeisung in die betreffende Förderleitung nicht ordnungsgemäß zum Anlegen einer Fahrgasse abgeschaltet worden ist. Dadurch wird der Bediener während des Ausbringvorgangs nicht durch fälschlicherweise ausgegebene Benutzerausgaben von seinen Bedienaufgaben der Sämaschine abgelenkt.

Zur Durchführung des beschriebenen Verfahrens ist eine Sämaschine vorgesehen, welche einen Vorratsbehälter zur Bevorratung des zu verteilenden Materials, insbesondere Saatgut und/oder Düngemittel, aufweist. Der Vorratsbehälter weist einen Auslaufbereich auf, wobei in dem Auslaufbereich Dosierorgane zur Einspeisung des zu verteilenden Materials in zu Ausbringelementen führende Förderleitungen angeordnet sind. Den Förderleitungen sind Sensoreinrichtungen zur Erfassung des Saatgutflusses in den Förderleitungen zugeordnet. Weiterhin weist die Sämaschine zumindest ein an der Sämaschine und/oder einer Zugmaschine angeordnetes Anzeige- und/oder Eingabegeräts zur Eingabe von Benutzereingaben durch einen Bediener auf, welches eine Speichereinheit zum Hinterlegen der mithilfe der Sensoreinrichtungen erfassten Daten und/oder der durch den Bediener über das Anzeige- und/oder Eingabegerät eingegebenen Benutzereingaben umfasst. Die Sämaschine weist eine Recheneinheit auf, welche zur Auswertung der mithilfe der Sensoreinrichtungen erfassten Daten und/oder der durch den Bediener über das Anzeige- und/oder Eingabegerät eingegebenen Benutzereingaben sowie zur Erstellung von Steuerbefehlen zur Steuerung der Sämaschine und/oder von Benutzerausgaben zur Anzeige auf dem Anzeige- und/oder Eingabegerät geeignet ist.

Es ist vorteilhaft, dass die Recheneinheit geeignet ist, die Position der Fahrgassen festzulegen und den Saatgutfluss in den den betreffenden Fahrgassen-Ausbringelementen zugeordneten Förderleitungen abzuschalten, dass die Sensoreinrichtungen geeignet sind, in den den Fahrgassen-Ausbringelementen zugeordneten Förderleitungen einen ausbleibenden Saatgutfluss festzustellen, dass der ausbleibende Saatgutsfluss als Fahrgassenzustand deklariert werden kann. Durch das Festlegen der Positionen der anzulegenden Fahrgassen mittels der Recheneinheit werden Irrtümer des Bedieners bei der Festlegung ausgeschlossen. Somit wird die Qualität des Arbeitsergebnisses gesteigert und die Wahrscheinlichkeit eines uneinheitlichen Säbildes reduziert.

Es ist vorteilhaft, dass das Anzeige- und/oder Eingabegerät geeignet ist, auf Basis des festgestellten ausbleibenden Saatgutflusses eine geeignete Benutzerausgabe anzuzeigen. Somit wird dem Bediener das Ausbleiben des Saatgutstromes zur Kenntnis gebracht. Zudem hat der Bediener die Möglichkeit, auf die Benutzerausgabe zu reagieren. Er kann sie beispielsweise bestätigen und/oder weiterführende Eingaben vornehmen.

Es ist von Vorteil, dass die Recheneinheit geeignet ist, auf Basis der Periodizität der anzulegenden Fahrgassen die Position zukünftiger Fahrgassenzustände zu ermitteln. Somit werden die möglichen Fälle festgelegt, in denen dem Bediener keine Benutzerausgabe wegen eines in einer einem Fahrgassen-Ausbringelement zugeordneten Förderleitung ausbleibenden Saatgutstroms angezeigt werden muss.

Ein weiterer Vorteil wird dadurch erreicht, dass die Speichereinheit geeignet ist, dass die ermittelten Positionen zukünftiger Fahrgassenzustände in der Speichereinheit hinterlegt werden können. Auf diese Weise stehen die Positionen zukünftiger Fahrgassenzustände während des Ausbringvorgangs zur Verfügung.

Es ist zudem vorteilhaft, dass die Recheneinheit geeignet ist, bei erneutem Feststellen eines ausbleibenden Saatgutflusses in zumindest einer Förderleitung die Position des dieser Förderleitung zugeordneten Ausbringelements mit den in der Speichereinheit hinterlegten Positionen zukünftiger Fahrgassen oder Fahrgassenzustände abzugleichen. Durch diesen Abgleich wird festgestellt, ob dem Benutzer eine beschriebene Benutzerausgabe angezeigt werden muss.

Ein Vorteil wird dadurch erreicht, dass die Recheneinheit geeignet ist, bei Übereinstimmung der Positionen eines erneut ausbleibenden Saatgutflusses in zumindest einer Förderleitung und einer zukünftigen Fahrgasse oder eines zukünftigen Fahrgassenzustands dem Bediener keine Benutzerausgabe über das Anzeige- und/oder Eingabegerät auszugeben. Somit wird dem Bediener nur dann eine Benutzerausgabe angezeigt, wenn die Saatgut-Einspeisung in die betreffende Förderleitung nicht ordnungsgemäß zum Anlegen einer Fahrgasse abgeschaltet worden ist.

Durch die Sensoreinrichtungen ist die beschriebene Sämaschine auch geeignet, festzustellen, ob Saatgut durch eine Förderleitung fließt, in welcher der Saatgutfluss zur Anlage einer Fahrgasse entsprechend der hinterlegten Positionen anzulegender Fahrgassen abgeschaltet sein sollte. Auf diese Weise lässt sich in zusätzlicher Weise eine Fehlfunktion der Fahrgassenschaltung feststellen.

Weitere Einzelheiten der Erfindung sind der Beispielsbeschreibung und den Zeichnungen zu entnehmen. Die Zeichnungen zeigen
- Fig.1: eine landwirtschaftliche Sämaschine auf einer Nutzfläche
- Fig.2: eine landwirtschaftliche Sämaschine in rückwärtiger Ansicht,
- Fig.3: eine mechanische Sämaschine in seitlicher Ansicht und
- Fig.4: eine pneumatische Sämaschine in seitlicher Ansicht.

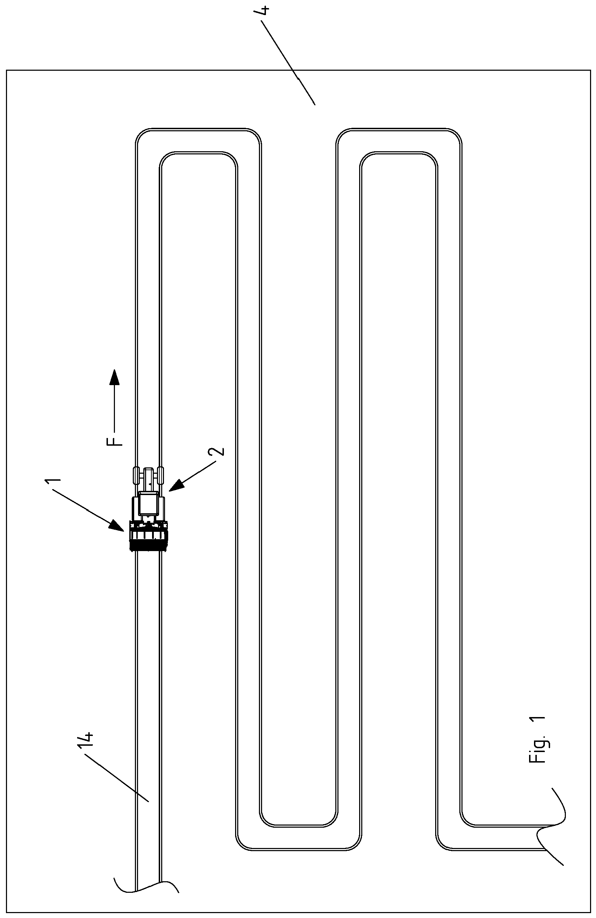

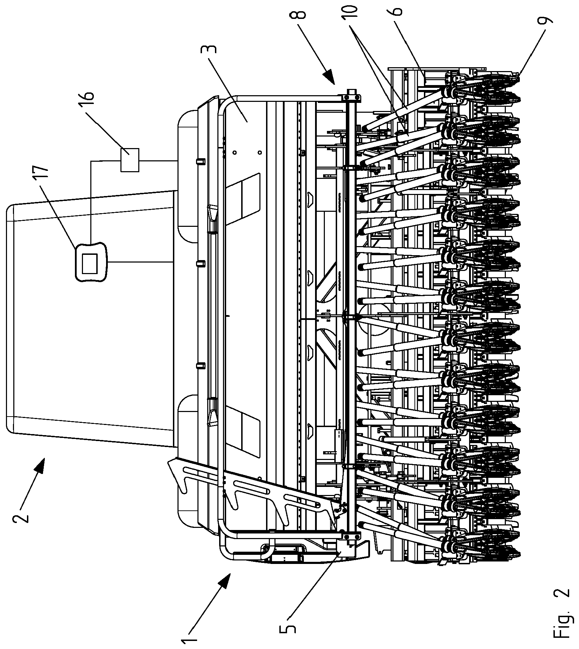

Eine landwirtschaftliche Sämaschine 1, welche im Beispiel der Fig. 1 bis 3 als eine an einer Zugmaschine 2 angebaute mechanische Sämaschine 1 ausgebildet ist, weist einen Vorratsbehälter 3 auf. Der Vorratsbehälter 3 dient der Bevorratung über einer landwirtschaftlichen Nutzfläche 4 auszubringenden Materials, vorzugsweise Saatgut und/oder Düngemittel, gezeigt in Fig. 1. Er stützt sich über einen teilweise dargestellten Rahmen 5 mittels einer Walzeneinheit 6 auf dem Erdboden ab, wie in Fig. 2 gezeigt.

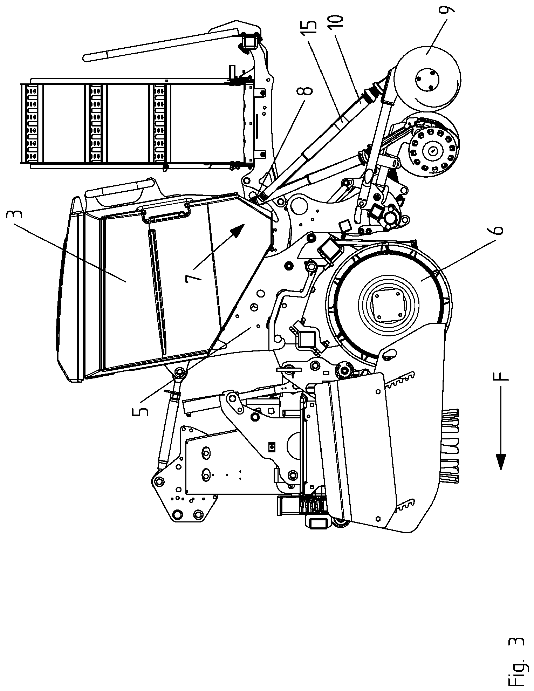

In seinem unteren Bereich weist der Vorratsbehälter 3 einen Auslaufbereich 7 auf. Unterhalb des Auslaufbereichs 7 ist nebeneinander quer zur Fahrtrichtung F eine Vielzahl von Dosierorganen 8 angeordnet, wie Fig. 3 zeigt. Die Dosierorgane 8 dienen der Einspeisung des auszubringenden Saatguts in zu Ausbringelementen 9 führende Förderleitungen 10.

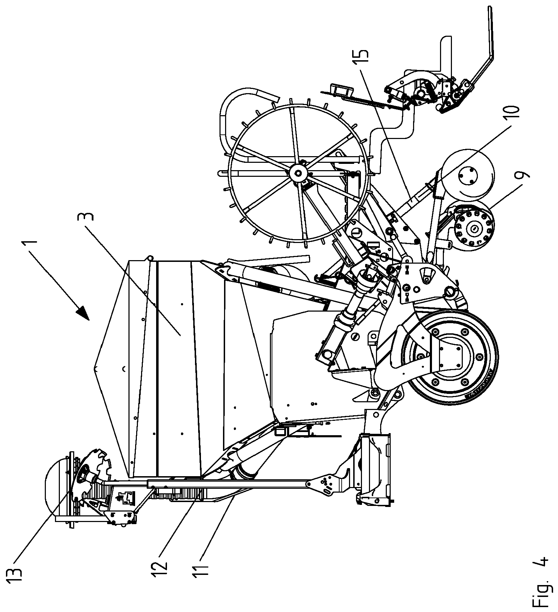

Als weitere Ausführungsform ist eine pneumatische Sämaschine 1 denkbar, wie sie in Fig. 4 gezeigt ist. Bei einer pneumatischen Sämaschine 1 speisen die unterhalb des Auslaufbereichs 7 des Vorratsbehälters 3 angeordneten Dosierorgane 8 das auszubringende Saatgut in zumindest eine mittels eines Gebläses 11 druckluftbeaufschlagte Gebläseleitung 12 ein. Die druckluftbeaufschlagte Gebläseleitung 12 ist mit einem Verteilerkopf 13 verbunden, in dem in bekannter Weise die Verteilung des auszubringenden Saatguts zu gleichen Teilen in die den Verteilerkopf 13 mit den Ausbringelementen 9 verbindenden Förderleitungen 10 erfolgt.

Zum Anlegen von Fahrgassen 14 wird in bekannter Weise die Einspeisung von Saatgut in die den Fahrgassen-Ausbringelementen 9 zugeordneten Förderleitungen 10 unterbunden. Als Fahrgassen-Ausbringelemente 9 fungieren stets jene Ausbringelemente 9, bei deren aktueller Position der Bedarf zum Anlegen einer Fahrgasse 14 besteht. Die Fahrgassen-Ausbringelemente 9 sind gegenüber den übrigen Ausbringelementen 9 dadurch charakterisiert, dass sie während der aktuellen Überfahrt kein Saatgut ausbringen.

Zum Unterbinden der Saatguteinspeisung in die den Fahrgassen-Ausbringelementen 9 zugeordneten Förderleitungen 10 werden bei einer in den Fig. 2 und 3 dargestellten mechanischen Sämaschine 1 die betreffenden Dosierorgane 8 abgeschaltet.

Zum Unterbinden der Saatguteinspeisung in die den Fahrgassen-Ausbringelementen 9 zugeordneten Förderleitungen 10 werden bei einer in Fig. 4 dargestellten pneumatischen Sämaschine 1 im Verteilerkopf 13 die Zugänge zu den betreffenden Förderleitungen 10 blockiert.

Im Bereich der Förderleitungen 10 weisen die in den Figuren dargestellten Sämaschinen 1 Sensoreinrichtungen 15 auf. Die Sensoreinrichtungen 15 sind vorgesehen, den Saatgutstrom durch die Förderleitungen 10 zu überwachen. Insbesondere weist jede Förderleitung 10 jeweils eine Sensoreinrichtung 15 auf. Sie lösen beispielsweise aus, wenn der ermittelte Saatgutstrom einen zuvor festgelegten Grenzwert unterschreitet. Insbesondere lösen sie aus, wenn der Saatgutstrom gänzlich versiegt.

Die Messwerte der Sensorvorrichtungen 15 werden an eine Recheneinheit 16 übermittelt, wobei die Übermittlung über Datenleitungen oder Funk erfolgen kann. Die Recheneinheit 16 wertet die von den Sensoreinrichtungen 15 übermittelten Daten aus und gleich insbesondere den an den jeweiligen Positionen festgestellten Saatgutfluss in den Förderleitungen mit den hinterlegten Positionen von Fahrgassen oder Fahrgassenzuständen ab. Bei Bedarf erstellt die Recheneinheit eine Benutzerausgabe, welche über ein Eingabe- und/oder Anzeigegerät 17 einem Bediener der Sämaschine 1 angezeigt wird. Die Recheneinheit 16 kann baulich in das Eingabe- und/oder Anzeigegerät 17 integriert sein, wie es in bekannter Weise bei Terminals für landwirtschaftliche Zugmaschinen 2 der Fall ist. Das Eingabe- und/oder Anzeigegerät 17 ist in einer für den Bediener günstigen Position, insbesondere in der Kabine einer landwirtschaftlichen Zugmaschine 2, angeordnet.

Zu Beginn des Verfahrens werden die Positionen der anzulegenden Fahrgassen 14 festgelegt. Die Position von Fahrgassen 14 ist abhängig von der Arbeitsbreite einer zur Bearbeitung der besäten Nutzfläche 4 vorgesehenen Maschine. Eine derartige Maschine ist beispielsweise eine landwirtschaftliche Feldspritze oder ein Düngerstreuer, welche zur Pflege der ausgesäten Pflanzen eingesetzt werden. Feldspritzen und/oder Düngerstreuer besitzen üblicherweise eine deutlich größere Arbeitsbereite als eine Sämaschine 1.

Zur Festlegung der Position der anzulegenden Fahrgassen 14 ist es daher denkbar, dass ein Bediener vorgibt, dass die Fahrgassen 14 jeweils bei Erreichen eines festgelegten Vielfachen des Saatreihenabstandes angelegt werden, wobei das festgelegte Vielfache aus dem Verhältnis von Arbeitsbreite beispielsweise der Feldspritze und dem Saatreihenabstand ermittelt wird.

Der Bediener hinterlegt die Arbeitsbereite der Sämaschine 1, den Saatreihenabstand und die Arbeitsbreite beispielsweise der Feldspritze in der der Recheneinheit 16 zugeordneten Speichereinheit. Die Eingabe der Daten erfolgt dabei über das Eingabe- und/oder Anzeigegerät 17. Auf Basis dieser Werte berechnet die Recheneinheit 16 die Positionen der anzulegenden Fahrgassen 14.

Während des Ausbringvorgangs steuert die Recheneinheit 16 die Sämaschine 1 derart, dass bei Erreichen der Position einer anzulegenden Fahrgasse 14, die Saatguteinspeisung in die den Fahrgassen-Ausbringelementen 9 zugeordneten Förderleitungen 10 unterbrochen wird. Die den Förderleitungen 10 zugeordneten Sensoreinrichtungen 15 lösen bei Ausbleiben des Saatgutstroms in den entsprechenden Förderleitungen 10 aus und liefern ein Ausgabesignal an die Recheneinheit 16. Die Recheneinheit 16 gleicht die Position des aktuell festgestellten ausbleibenden Saatgutflusses mit den in der Speichereinheit hinterlegten Positionen der anzulegenden Fahrgassen 14 ab. Wird eine Übereinstimmung der Positionen festgestellt, deklariert die Recheneinheit 16 das festgestellte Ausbleiben des Saatgutflusses als Fahrgassenzustand. Die Recheneinheit 16 erstellt aus dem Ausgabesignal eine Benutzerausgabe, welche mittels des Eingabe- und/oder Anzeigegeräts 17 angezeigt wird. Diese Benutzerausgabe gibt dem Bediener zur Kenntnis, dass in einer Förderleitung eine Störung des Saatgutstroms festgestellt und/oder ein Fahrgassenzustand deklariert worden ist.

Ist der Fahrgassenzustand automatisiert auf Basis der in der Speichereinheit hinterlegten Positionen anzulegender Fahrgassen deklariert worden, kann die Recheneinheit die Benutzerausgabe unterdrücken. Dem Bediener wird dann bei Fahrgassen zuständen keine Benutzerausgabe ausgegeben.

Wird der Bediener hingegen nur über das Ausbleiben des Saatgutflusses zu einem der Ausbringelemente 9 informiert und erfolgt kein Abgleich der Positionen durch die Recheneinheit 16, gleicht er die Position des festgestellten ausbleibenden Saatgutflusses mit den festgelegten Positionen der anzulegenden Fahrgassen 14 ab. Stellt der Bediener eine Übereinstimmung der Position des festgestellten ausbleibenden Saatgutflusses zu einem der Ausbringelemente 9 und der Position einer anzulegenden Fahrgasse 14 fest, erfolgt die Deklaration als Fahrgassenzustand durch den Bediener. Dazu nimmt er geeignete Eingaben mittels Eingabe- und/oder Anzeigegerät 17 vor. Beispielsweise bestätigt er die ihm ausgegebene Benutzerausgabe in geeigneter Weise. Auf diese Weise bestätigt der Bediener die von der Recheneinheit 16 ausgegebene und über das Eingabe- und/oder Anzeigeelement 17 angezeigte Benutzerausgabe. Gleichzeit bestätigt der Bediener, dass die Sensoreinrichtung 15 die ausbleibende Saatgutförderung in der dem Fahrgassen-Ausbringelement 9 zugeordneten Förderleitung 10 korrekt erkannt hat, diese aber im Fall einer anzulegenden Fahrgasse 14 für die Arbeitsaufgabe unschädlich und/oder erwünscht ist.

Da für anzulegende Fahrgassen 14 und/oder für Fahrgassenzustände ein Ausbleiben des Saatgutsflusses in den entsprechenden Fahrgassen-Ausbringelementen 9 erwünscht ist, ist in diesen Fällen bei einem erneuten Feststellen eines ausbleibenden Saatgutflusses in der beschriebenen Weise keine neuerliche Benutzerausgabe erforderlich. Für den weiteren Ausbringvorgang kann eine entsprechende Benutzerausgabe durch die Recheneinheit 16 unterdrückt werden.

Fahrgassen 14 kommen auf einer zu bearbeitenden Nutzfläche 4 periodisch vor. Die Recheneinheit 16 leitet diese Periodizität aus den zuvor eingegebenen Daten zur Bestimmung der Positionen der anzulegenden Fahrgassen 14, insbesondere aus den eingegebenen Arbeitsbreiten der Sämaschine 1 und beispielsweise der Feldspritze, ab.

Somit ist die Recheneinheit 16 in der Lage, die Positionen der anzulegenden Fahrgassen 14 abzuleiten und/oder vorauszuberechnen, sobald zumindest beide Fahrspuren einer Fahrgasse 14 einmal durch den Bediener in der beschriebenen Weise als Fahrgassenzustand deklariert worden sind. Nachfolgend wird ein in einer Förderleitung 10 ausbleibender Saatgutstrom mit den vorausberechneten Positionen der zu erwartenden Fahrgassenzustände oder den hinterlegten Positionen der Fahrgassen abgeglichen. Er wird nicht mehr mittels einer Benutzerausgabe angezeigt, wenn die Position mit der eines abgeleiteten Fahrgassenzustands zusammen fällt.

Das vorgeschlagene Verfahren ist zum einen voll automatisiert denkbar. So werden die Fahrgassenzustände auf Basis der hinterlegten Positionen anzulegender Fahrgassen 14 ermittelt und mit den Positionen gemessener Störungen des Saatgutflusses in den Förderleitungen 10 abgeglichen. In diesem Fall sind Benutzereingaben während des Ausbringvorgangs nicht zwingend erforderlich, obwohl sie aus den beschriebenen Gründen vorteilhaft sein können.

Zum anderen ist dieses Verfahren geeignet, zwei prinzipiell unabhängige Systeme der Sämaschine 1, welche beide von der Recheneinheit 16 gesteuert werden, zu verknüpfen: Die Überwachung des Saatgutstroms in den Förderleitungen 10 ist nicht grundsätzlich abhängig von der automatisierten Anlage von Fahrgassen 14. Daher wird der ausbleibende Saatgutstrom auch beim ordnungsgemäßen Anlegen einer Fahrgasse 14 detektiert und mittels Benutzerausgabe angezeigt. Erst durch die Deklaration als Fahrgassenzustand durch den Bediener werden beide Systeme in Einklang gebracht.

## Patentansprüche

1. Verfahren zur Steuerung einer landwirtschaftlichen Sämaschine (1), insbesondere zur Planung von Fahrgassen (14), zum Ausbringen von zu verteilendem Material, insbesondere Saatgut und/oder Düngemittel, wobei das Verfahren die Nutzung folgender technischer Merkmale der Sämaschine (1) bedingt:
• Dosierorgane (8) zur Einspeisung des zu verteilenden Materials Förderleitungen (10),
• Sensoreinrichtungen (15) zur Erfassung des Saatgutflusses in den zu Ausbringelementen (9) führenden Förderleitungen (10),
• zumindest ein Anzeige- und/oder Eingabegerät (17) zur Eingabe von Benutzereingaben durch einen Bediener,
• eine Speichereinheit zum Hinterlegen der mithilfe der Sensoreinrichtungen (15) erfassten Daten und/oder der durch den Bediener über das Anzeige- und/oder Eingabegerät (17) eingegebenen Benutzereingaben,
• eine Recheneinheit (16) zur Auswertung der mithilfe der Sensoreinrichtungen (15) erfassten Daten und/oder der durch den Bediener über das Anzeige- und/oder Eingabegerät (17) eingegebenen Benutzereingaben sowie zur Erstellung von Steuerbefehlen zur Steuerung der Sämaschine (1) und/oder von Benutzerausgaben zur Anzeige auf dem Anzeige- und/oder Eingabegerät (17),
wobei das Verfahren die folgenden Verfahrensschritte umfasst:
• Festlegung der Position von Fahrgassen (14) durch den Bediener oder die Recheneinheit (16), wobei automatisiert der Saatgutfluss in den den betreffenden Fahrgassen-Ausbringelementen (9) zugeordneten Förderleitungen (10) abgeschaltet wird,
• Hinterlegen der festgelegten Position von Fahrgassen (14) in einer Speichereinheit,
• Feststellen eines ausbleibenden Saatgutflusses in den den Fahrgassen-Ausbringelementen (9) zugeordneten Förderleitungen (10) mithilfe der Sensoreinrichtungen (15) und
• Deklaration des ausbleibenden Saatgutflusses als Fahrgassenzustand.

2. Verfahren nach Anspruch 1, **dadurch gekennzeichnet, dass** auf Basis des festgestellten ausbleibenden Saatgutflusses eine geeignete Benutzerausgabe über das Anzeige- und/oder Eingabegerät (17) angezeigt wird.

3. Verfahren nach zumindest einem der vorangegangenen Ansprüche, **dadurch gekennzeichnet, dass** die Deklaration des ausbleibenden Saatgutflusses als Fahrgassenzustand automatisiert oder durch den Bediener erfolgt.

4. Verfahren nach zumindest einem der vorangegangenen Ansprüche, **dadurch gekennzeichnet, dass** die Recheneinheit (16) auf Basis der Periodizität der anzulegenden Fahrgassen (14) die Position zukünftiger Fahrgassenzustände ermittelt.

5. Verfahren nach zumindest einem der vorangegangenen Ansprüche, **dadurch gekennzeichnet, dass** die ermittelten Positionen zukünftiger Fahrgassenzustände in der Speichereinheit hinterlegt werden.

6. Verfahren nach zumindest einem der vorangegangenen Ansprüche, **dadurch gekennzeichnet, dass** bei erneutem Feststellen eines ausbleibenden Saatgutflusses in zumindest einer Förderleitung (10) die Position des dieser Förderleitung (10) zugeordneten Ausbringelements (9) mit den in der Speichereinheit hinterlegten Positionen zukünftiger Fahrgassen (14) oder Fahrgassenzustände abgeglichen wird.

7. Verfahren nach zumindest einem der vorangegangenen Ansprüche, **dadurch gekennzeichnet, dass** bei Übereinstimmung der Positionen eines erneut ausbleibenden Saatgutflusses in zumindest einer Förderleitung (10) und einer zukünftigen Fahrgasse (14) oder eines Fahrgassenzustands dem Bediener keine Benutzerausgabe angezeigt wird.

8. Landwirtschaftliche Sämaschine (1) zur Durchführung des Verfahrens der Ansprüche 1 bis 7, aufweisend einen Vorratsbehälter (3) zur Bevorratung des zu verteilenden Materials, insbesondere Saatgut und/oder Düngemittel, wobei der Vorratsbehälter (3) einen Auslaufbereich (7) aufweist und in dem Auslaufbereich (7) Dosierorgane (8) zur Einspeisung des zu verteilenden Materials in zu Ausbringelementen (9) führende Förderleitungen (10) angeordnet sind, wobei den Förderleitungen (10) Sensoreinrichtungen (15) zur Erfassung des Saatgutflusses in den Förderleitungen (10) zugeordnet sind, aufweisend zumindest ein an der Sämaschine (1) und/oder einer Zugmaschine (2) angeordnetes Anzeige- und/oder Eingabegeräts (17) zur Eingabe von Benutzereingaben durch einen Bediener, welches eine Speichereinheit zum Hinterlegen der mithilfe der Sensoreinrichtungen (15) erfassten Daten und/oder der durch den Bediener über das Anzeige- und/oder Eingabegerät (17) eingegebenen Benutzereingaben umfasst, aufweisend eine Recheneinheit (15), welche zur Auswertung der mithilfe der Sensoreinrichtungen (15) erfassten Daten und/oder der durch den Bediener über das Anzeige- und/oder Eingabegerät (17) eingegebenen Benutzereingaben sowie zur Erstellung von Steuerbefehlen zur Steuerung der Sämaschine (1) und/oder von Benutzerausgaben zur Anzeige auf dem Anzeige- und/oder Eingabegerät (17) geeignet ist, **dadurch gekennzeichnet, dass** die Recheneinheit (16) geeignet ist, die Position der Fahrgassen (14) festzulegen und den Saatgutfluss in den den betreffenden Fahrgassen-Ausbringelementen (9) zugeordneten Förderleitungen (10) abzuschalten, dass die Speichereinheit geeignet ist, die festgelegten Positionen von Fahrgassen (14) zu hinterlegen, dass die Sensoreinrichtungen (15) geeignet sind, in den den Fahrgassen-Ausbringelementen (9) zugeordneten Förderleitungen (10) einen ausbleibenden Saatgutfluss festzustellen und dass der ausbleibende Saatgutfluss als Fahrgassenzustand deklariert werden kann.

9. Sämaschine (1) nach Anspruch 8, **dadurch gekennzeichnet, dass** das Anzeige- und/oder Eingabegerät (17) geeignet ist, auf Basis des festgestellten ausbleibenden Saatgutflusses eine geeignete Benutzerausgabe anzuzeigen.

10. Sämaschine (1) nach zumindest einem der vorangegangenen Ansprüche 8 oder 9, **dadurch gekennzeichnet, dass** die Recheneinheit (16) geeignet ist, auf Basis der Periodizität der anzulegenden Fahrgassen (14) die Position zukünftiger Fahrgassenzustände zu ermitteln.

11. Sämaschine (1) nach zumindest einem der vorangegangenen Ansprüche 8 bis 10, **dadurch gekennzeichnet, dass** die Speichereinheit geeignet ist, dass ermittelten Positionen zukünftiger Fahrgassenzustände in der Speichereinheit hinterlegt werden können.

12. Sämaschine (1) nach zumindest einem der vorangegangenen Ansprüche 8 bis 11, **dadurch gekennzeichnet, dass** die Recheneinheit (16) geeignet ist, bei erneutem Feststellen eines ausbleibenden Saatgutflusses in zumindest einer Förderleitung (10) die Position des dieser Förderleitung (10) zugeordneten Ausbringelements (9) mit den in der Speichereinheit hinterlegten Positionen zukünftiger Fahrgassen (14) oder Fahrgassenzustände abzugleichen.

13. Sämaschine (1) nach zumindest einem der vorangegangenen Ansprüche 8 bis 12, **dadurch gekennzeichnet, dass** die Recheneinheit (16) geeignet ist, bei Übereinstimmung der Positionen eines erneut ausbleibenden Saatgutflusses in zumindest einer Förderleitung (10) und einer zukünftigen Fahrgasse (14) oder eines zukünftigen Fahrgassenzustands dem Bediener keine Benutzerausgabe über das Anzeige- und/oder Eingabegerät (17) auszugeben.
